Europäisches Patentamt

European Patent Office

Office européen des brevets

(11) Publication number: **0 104 949**
**B1**

(12) **EUROPEAN PATENT SPECIFICATION**

(45) Date of publication of patent specification: **04.01.89**

(21) Application number: **83305820.9**

(22) Date of filing: **28.09.83**

(51) Int. Cl.⁴: **F 16 L 55/16, F 16 L 47/00,
F 16 L 58/10, B 29 C 63/42,
B 32 B 7/04**

(54) **Method and article for sealing a substrate using a recoverable sleeve.**

(30) Priority: **29.09.82 US 426356
29.09.82 US 427209**

(43) Date of publication of application:
**04.04.84 Bulletin 84/14**

(45) Publication of the grant of the patent:
**04.01.89 Bulletin 89/01**

(84) Designated Contracting States:
**AT BE CH DE FR IT LI NL SE**

(56) References cited:
**DE-A-2 712 077
GB-A- 717 079
GB-A-1 566 552
US-A-4 135 553**

(73) Proprietor: **RAYCHEM CORPORATION (a
Delaware corporation)
300 Constitution Drive
Menlo Park, California 94025 (US)**

(72) Inventor: **Molinari, Robert James
64, Hillview Avenue
Redwood City California 94062 (US)**
Inventor: **Chandler, Daniel Alan
48, Newell Road
East Palo Alto California 94303 (US)**
Inventor: **Chan, Chi-Ming
440, Cesano Crt, 111
Palo Alto California 94306 (US)**

(74) Representative: **Benson, John Everett et al
Raychem Limited Intellectual Property Law
Department Swan House 37-39, High Holborn
London WC1 (GB)**

**Description**

Background of the invention

This invention relates to a method and article for delivering a sealing material to a substrate in such a manner that the material is delivered in a progressive fashion to the substrate.

It is known in the art to apply certain corrosion protection materials to a substrate to protect it from its surrounding environment. For example, oil pipelines are typically coated with a polymeric layer such as an epoxy resin. The polymeric layer can be applied as a coating composition or as a polymeric article such as a sleeve or tape which is secured to the surface of the substrate by means of an adhesive. Conventional coating techniques work well when the substrate is located above ground or the substrate is coated above ground and subsequently buried in the ground or submerged in water.

Special problems are encountered when the substrate to be coated is in an environment in which it is continually wetted, for example, in the splash zone of off-shore oil rigs, pier pilings, on barges and the like. Such substrates are usually, but not always, coated with a protective coating before installation. Such coatings may become damaged during use, permitting water to penetrate to the underlying substrate causing corrosion. It is therefore desirable to be able to coat substrates, for exampe, in the splash zone of oil rigs, in their environment with a protective coating in the event the preinstallation coating is damaged or no such coating has been applied and corrosion protection is now desired.

The application of a curable coating composition to a substrate submerged in water or in the splash zone is discussed in U.S. Patents Nos. 3,160,518 to Jorda, 3,639,344 to Kinneman and 4,022,946 to Cummings. The coating composition can be applied by various techniques such as by means of a trowel or the like. However, it is difficult to apply the coating to the wetted surface of the substrate such that it will adhere to the surface forming a pine-hole free coating and without trapping water between the coating and the substrate.

US—A—4135553 on which the invention is based, describes a recoverable sleeve suitable for use as a protective insulator for a splice between electrical cables. The recoverable sleeve, typically an elastomer is held in the recoverable position by an external restraint bonded to the sleeve. The bond may be weakened or destroyed by the application of a solvent to the bond-line.

This invention provides an improved method of providing such a coating. A sealing material is applied to or forced against the surface of the substrate in a progressive, and preferably continuous manner, thereby displacing water from the surface of the substrate resulting in little, if any, water trapped between the coating and the substrate. The progressive manner of application of the sealing material exerts pressure against the substrate during and after the coating step resulting in superior adhesion of the coating to the substrate.

This invention provides a method of delivering a sealing material to a substrate wetted with water, which comprises:

(a) positioning the sealing material adjacent the substrate;

(b) positioning concentrically with respect to the substrate and facing the sealing material, a sleeve maintained in a recoverable configuration by a restraining member bonded to the sleeve by water-sensitive adhesive; and

(c) contacting the water-sensitive adhesive with water causing the bond to fail and the sleeve to recover progressively along its length, toward the substrate, thereby applying pressure to the sealing material causing it to displace water from the substrate.

The invention also provides an article capable of delivering a sealing material to a substrate wetted with water, which comprises:

(a) a sleeve; and

(b) a restraining member bonded to the sleeve by a water-sensitive adhesive, thereby maintaining the sleeve in a recoverable configuration such that when the adhesive is contacted with water the bond fails causing the sleeve to recover progressively along its length, towards the substrate, thereby applying pressure to the sealing material placed adjacent the substrate causing it to displace water from the substrate.

The invention is particularly applicable to corrosion protection of substances which are continuously or intermittently wet with water, and cannot be removed to a dry place for installation of the sleeve. This is because the sleeve of the invention can displace water already present. The water applied to the sleeve in the method of the invention will generally be indiscriminate or bulk application such as by immersion or wave spraying and the like. In particular the invention is applicable to corrosion protection of marine structures such as supports and pipes etc in the splash zones of oil rigs.

The corrosion protection composition can be a curing or non-curing coating composition. It is preferred to use a curing composition applied in its curable, i.e. non-cured state. The curable composition may be a two-part resin system comprising a prepolymer and a curing initiator. Typical compositions that may be used are epoxy resins with an amine hardener, for example compositions disclosed in above mentioned U.S. Patent Nos. 3,160,518, 3,639,344 and 4,022,946, the disclosures of which are incorporated herein by reference. Curable systems that may be used are thus known in the art. Several compositions of this type are commercially available.

Alternatively, a one-part sealing material may be used, for example, a moisture-curing polysulfide

EP 0 104 949 B1

based mastic formulation. Such a formulation may be modified with appropriate wetting agents which wet in the presence of water, and allow an adherent film to cure when contacted with moisture. A typical formulation of this type comprises about 80% of a polysulfide mastic and about 20% of a fatty acid modified wetting agent.

The sealing material preferably has a viscosity at 20°C of about 1000 to about 1000000 Pa · s (about 100 to about 100000 poise) and preferably is applied in an amount to provide a coating of from about $1.25 \times 10^{-4}$ to about $1.25 \times 10^{-2}$ m (5 to 500 mils) in thickness on the substrate.

The sealing material is interposed between the sleeve and the substrate, and is preferably applied to an inner surface of the sleeve, as discussed in more detail below, or applied directly onto the substrate by any technique after which the sleeve is recovered in a progressive manner over the resulting coating before it is permitted to cure significantly. The resulting coating adheres strongly to the substrate.

The corrosion protection sealing material is applied to or forced against the surface in a progressive fashion, under pressure of the sleeve. This can result in superior corrosion prevention of the substrate as:

water, air and the like can be displaced from the surface by the sealing material;

the sealing material can be squeezed, or extruded onto or against the substrate, such that it forms a superior adherent film; and

the recovered sleeve can remain over the sealing material and protect it from water and mechanical damage.

The corrosion protection sealing material is applied in accordance with this invention by means of a progressive recovery, preferably a progressive shrinkage, of a sleeve held in its recoverable configuration by a restraining member. Where the sleeve is shrinkable, the restraining member will in general be bonded to an external surface of the sleeve.

The sleeve is preferably an elastomer such as a stretchable rubber which can accommodate expansion of from about 20% up to about 500% or higher, and which does not lose its ability to recover when stored for a suitable length of time, such as one year. Preferred elastomers are neoprene and ethylene-propylenediene terpolymer elastomers. The elastomer may be formulated, or treated after formulation, to ensure good adhesion to the preferably external, restraining member or to the adhesive composition used to adhere the stretched or otherwise deformed sleeve to the restraining member. For example, the inclusion of chloroprene units in neoprene and/or treatment with sulfuric acid or nitric acid for from 15 seconds to 30 minutes can result in improved properties. Also, surface treatment such as, flame treatment, plasma treatment, abrasion, solvent washing, and the like can enhance the properties of the sleeve.

The external restraining member holds the stretched sleeve in its stretched configuration until release of the sleeve is triggered. In accordance with this invention, when release of the elastomeric sleeve is triggered the sleeve recovers in a progressive and preferably controlled manner so as to force the adhesive against the substrate in a progressive manner. The release may be, for example, from one end of the sleeve to the other or from the center region of the sleeve to each end. Various techniques may be used to achieve the progressive release of the sleeve. Water may be applied from one end of the restraining member to the other in a progressive fashion. Another way of achieving this is to apply water indiscriminately along the length of the sleeve and rely on a characteristic of the sleeve to ensure progressive recovery. For example, the restraining member may be provided with varying sized perforations or apertures so that water is conducted to the interface between the sleeve and the restraining member in the desired pattern. Alternatively, or in addition, the restraining member may be water soluble to provide the desired progressive recovery. As a further possibility, the thickness of the restraining member may vary along the length of the sleeve so that uniform application of solvent, or immersion in the solvent, results in the desired progressive recovery. Another way of achieving this is to mash portions of the adhesive in an appropriate pattern to provide access to the adhesive by the solvent as desired to produce the progressive shrink effect. The restraining member may be peeled from the sleeve after initial water induced release, particularly by peeling in circumferential strips starting at one end and continuing strip by strip along the sleeve.

The external restraining member may be bonded directly to the sleeve, or an intermediate adhesive layer can be used to provide adequate adhesion between the restraining member and the sleeve. The restraining member should have sufficient strength and sufficient adhesive strength (using an intermediate adhesive layer if necessary) to hold the sleeve in its recoverable configuration for a useful shelf life, typically from one month to at least a year. In general, this means that the restraining member should have sufficient strength and sufficient adhesive strength to hold out an elastomer under 100% strain for the desired period of time, where the elastomer has a modulus (at 100% strain) of about 0.68—68 bar (10—1000 psi), preferably of about 6.8—20.4 bar (100—300 psi). Materials that may be used for the restraining member include polyethylene, polyvinyl chloride, polyethylene oxide, polyvinyl alcohol, ethylene-vinyl acetate copolymers, wood, carboard, metal sheet, metal mesh, and paper.

In a two-member laminate system, the restraining member used is water sensitive and adheres directly to the sleeve. In a three-member laminate system the restraining member is generally not water sensitive and is used together with a water sensitive adhesive layer. Water sensitive, preferably water soluble, polymers are generally used as the base material for this adhesive. Water need not necessarily dissolve the bond between the sleeve and the restraining member; all that is necessary is that water must cause the bond to fail under conditions prevailing in the field. Since many such water-sensitive polymers are brittle at

3

room temperature or otherwise difficult to process thermo-plastically, they can be modified, for example, by the addition of an elastomer.

The water-soluble polymer should be one which has sufficient adhesive strength to bond the expanded elastomer sleeve to the restraining member. Preferably, this adhesive strength is from about 0.54 to about 3.6 daN per cm width (3 to 20 pounds per inch width). If the adhesive is to be used as the restraining member itself, the water-soluble polymer also should possess sufficient structural integrity to not only bond to the sleeve but also to retain it in its expanded (or stretched) configuration. Typical water-soluble polymers which can be used include natural and synthetic polymers, for example, water-soluble acrylamide polymers, acrylic acid polymers, methacrylic acid polymers, polethylene oxide, polysaccharides, alkyl celluloses such as methyl- or ethylcellulose, polyethylene glycols, polyvinyl alcohol, polyvinylpyrrolidone, cyanamers, modified polyethylenes and the like, as well as blends thereof. Particularly preferred are polyethylene oxide, polyvinyl-pyrrolidone and polyvinyl alcohol.

The adhesive preferably has an ultimate room temperature elongation of from about 3 to 500%, preferably from about 10 to 100% and most preferably from about 15 to 150%. In addition, we prefer that the adhesive is sufficiently flexible that it possesses a Secant Modulus at 2% strain, measured by ASTM D638, of greater than $6.8 \times 10^4$ bar (100,000 psi), more preferably $9.5 \times 10^4$ to $1.7 \times 10^5$ bar (140000 to 250000 psi) and most preferably $1.3 \times 10^5$ to $1.5 \times 10^5$ bar (190000 to 220000 psi).

The adhesive desirably comprises from about 70 to about 95%, preferably from about 75 to about 82%, of a water-soluble polymer and corresponding from about 30 to about 5%, and preferably from about 18 to about 25% of an elastomer. The elastomer is preferably employed in an uncured state. Elastomers which can be used include natural rubber, ethylene-propylene copolymer rubbers, ethylene-propylene-diene terpolymers, polychloroprenes, styrene-butadiene copolymer rubber, butyl rubber, polyisobutylene, polybutadiene, epichlorohydrin polymers, elastomeric copolymers of ethylene and acrylic acid, polyurethane, and the like, as well as blends thereof. Preferred elastomers include polychloroprene, styrenebutadiene copolymer rubbers, and polyisobutylene. The particular elastomer used in a given formulation depends to a certain extent on the water-soluble polymer used. One skilled in the art with this teaching before him can readily ascertain, without undue experimentation, the appropriate elastomer and amount thereof to use with a particular water-soluble polymer to achieve the desired result. In addition to the above elastomers mannitol or other sugars may be used to plasticize the water-soluble polymer without loss of adequate adhesion.

Other additives can be incorporated into the adhesive, for example, dopants, conventional stabilizers, antioxidants, pesticides, such as fungicides and the like, tackifiers, acid scavengers, and the like.

The adhesive may be prepared by blending the water-soluble polymer and elastomer in conventional compounding and melt processing equipment, such as a two-roll mill, intensive internal mixer, Banbury mixer, single- or twin-screw compounding extruder and the like.

As mentioned above, these adhesives are particularly suitable for use in bonding an expanded elastomeric sleeve to a separate restraining member. In some embodiments, however, the adhesive itself functions as the restraining member, as disclosed in U.S. Patent No. 4,135,553 to Evans et al.

Several compositions comprising a water-soluble polymer and an elastomer were prepared and tested. In each composition polyvinyl alcohol was used as the water-soluble polymer in an amount of 80 parts by weight. Twenty (20) parts of an elastomer were blended with the water-soluble polymer. The compositions were compounded on a two-roll mill at 205°C (400°F). The elastomers used in compositions A to M were:

A: Styrene-butadiene rubber—commercially available from Phillips Chemical Company as Solprene 1205.

B: ethylene-propylene-diene terpolymer—commercially available from Exxon Chemical Company as Nordel 1320.

C: epichlorohydrin rubber—commercially available from B. F. Goodrich Company as Hydrin 200.

D: polyisobutylene—commercially available from Exxon Chemical Company as Vistanex LM80.

E: polychloroprene—commercially available from E. I. Du Pont de Nemours & Company as Neoprene W.

F: polychloroprene—commercially available from E. I. Du Pont de Nemours Elastomers Company as Neoprene WRT.

G: chlorosulfonated polyethylene—commercially available from E. I. du Pont de Nemours Elastomers Company as Hypalon.

H: polybutadiene—commercially available from Arco Chemical Company as Poly bd R-45M.

I: polyurethane—commercially available from Upjohn Chemical Company as Pellethane.

J: ethylene-acrylic acid copolymer elastomer—commercially available from E. I. du Pont de Nemours Elastomers Company as Vamac.

K: chlorinated polyethylene—commercially available from Dow Chemical Company as Dow CPE 2522.

L: polyester copolymer—commercially available from E. I. du Pont de Nemours as Hytrel 4056.

M: polyester—commercially available from E. I. de Pont de Nemours Plastics Company as Dyvax.

The following evaluations were performed on the compositions.

Melt index (processing viscosity)
The viscosity of the composition during processing was determined using Melt Index test according to ASTM D1238, Condition G.

Room temperature flexibility
(a) Bend Test
A 15.24 cm (6 inch) by 1.27 cm (0.5 inch) by 0.127 cm (0.050 inch) sample was cut from a compression molded plaque (at 205°C) of the composition. The sample was manually bent around a 0.635 cm (0.250 inch) mandrel at room temperature and visually inspected for cracks. If any cracks were noted the sample failed the test. If none was visible, the sample passed the test.

(b) Secant modulus
The modulus of each sample under a strain of 2% was measured using the tension test as outlined in ASTM D638.

Compatibility
The compatibility of the components of the composition was rated visually.

Adhesive peel strength
Samples were prepared by laminating 0.508 cm (0.020 inch) of adhesive between two sheets of Neoprene at a temperature of 200°C (390°F) and a pressure of less than 0.68 bar (10 psi). A sample 2.5 cm (1 inch) wide was cut from the laminate. Each end of the sample was clamped in the jaws of a tensile testing machine and pulled apart at a rate of 5 cm (2 inches) per minute. The force required to separate the Neoprene sheets from the adhesive composition was measured. [This test is a variation of ASTM D1000 Method A.]. Neoprene sheets were used in place of steel plates and the angle of peel was 90° instead of 180°.

Ultimate tensile strength and elongation
The test procedure of ASTM D638, was used to determine the ultimate tensile strength and elongation.
Results of the tests are shown in Table I.

TABLE I

| Composition | Melt index (g/10 min.) | Flexibility bond test/ secant modulus ×10$^4$ bar (×10$^4$ psi) | Compatibility | Adhesive peel strength daN/cm width (PIW) | Ultimate tensile strength ×10$^{-3}$ bar (×10$^{-3}$ psi) | Ultimate elongation (%) |
|---|---|---|---|---|---|---|
| A | 6.2 | P  0.139  (2.05) | C | 0.9  (5.0) | 0.360 (5.3) | 15 |
| B | 3.2 | P  — | I | — | — | — |
| C | 5.9 | P  0.143  (2.10) | C | 2.4 (13.2) | 0.605 (8.9) | 20 |
| D | 6.2 | P  0.092  (1.35) | C | 2.7 (15.0) | 0.340 (5.0) | 17 |
| E | 7.3 | P  0.129  (1.90) | C | 2.7 (15.0) | 0.340 (5.0) | 2.0 |
| F | 5.9 | P  0.118  (1.74) | C | 2.9 (16.1) | 0.421 (6.2) | 20 |
| G | 6.2 | P  0.128  (1.89 | C | 0.8  (4.4) | 0.476 (7.0) | 13 |
| H | 6.8 | P  — | C | — | — | — |
| I | 3.1 | P  0.145  (2.13) | I | 2.4 (13.2) | 0.557 (8.2) | 23 |
| J | 3.0 | P  0.151  (2.23) | C | 0.6  (3.3) | 0.550 (7.8) | 30 |
| K | 3.8 | P  0.183  (2.70) | I | 1.6  (8.8) | 0.482 (7.1) | 13 |
| L | 6.1 | P  — | C | — | — | — |
| M | 6.3 | P  0.137  (2.01) | C | 2.0 (11.0) | 0.691 (8.1) | 23 |

It will be appreciated that the restraining member used to hold the elastomeric sleeve in a recoverable configuration may be a mechanical structure. It will be appreciated that this external restraining member performs the same function as that described above.

It will further be appreciated that the sleeve may be supplied in tubular or in wrap-around form. When a wrap-around sleeve is used, means will be provided to retain the sleeve in a wrap-around configuration around the substrate. A preferred fastening means is disclosed in GB 2108330.

Certain aspects of this invention can be more readily understood by reference to the accompanying drawings, in which:

Figure 1 shows a sleeve of the invention; and

Figure 2 shows extrusion of sealing material in a progressive manner.

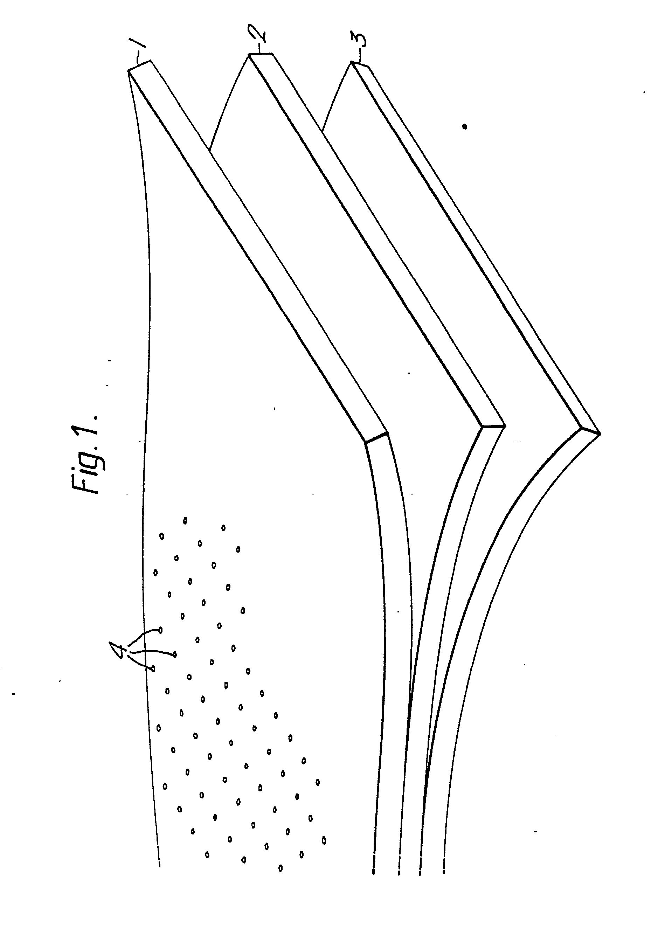

Figure 1 shows the material of an article suitable for use in the invention. The article has three layers: the top layer, 1, is a restraining member, in this case a semi-rigid hold-out member, the middle layer, 2, is an expanded elastomer and the lower layer, 3, is a cold applied corrosion protection sealing material. The top layer, 1, has been provided with perforations, 4. The perforations, 4, allow permeation of water to produce a controlled progressive recovery of the expanded elastomeric sleeve, 2. In this way the sleeve, 2, can be made to recover gradually and gently from one end to the other, displacing water from the surface of the substrate as it does so (not shown). A wrap-around sleeve could be used, secured in the wrapped configuration by means such as those disclosed in G.B. Patent Publication 2108330.

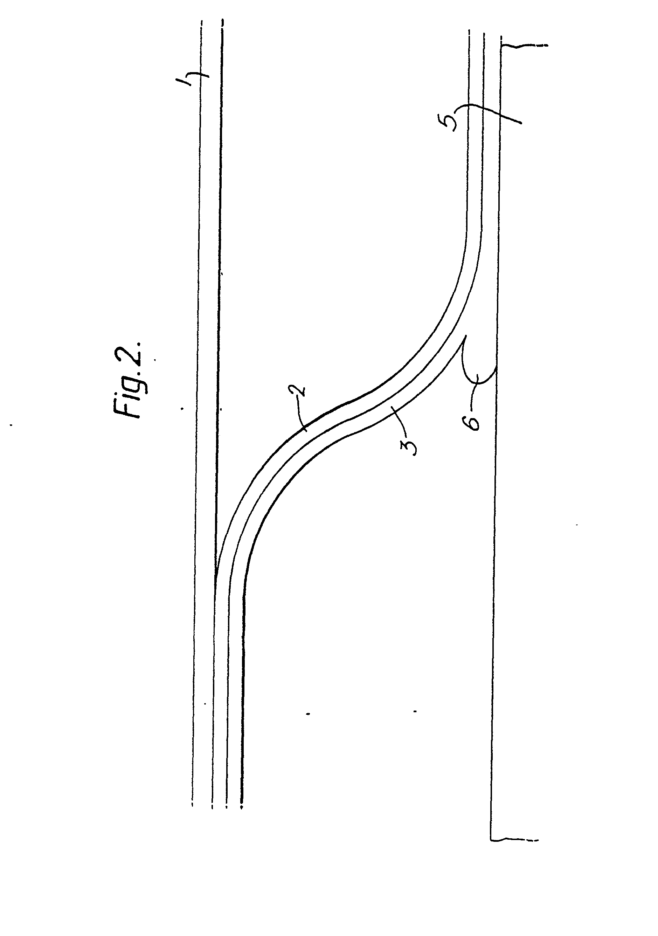

The beneficial effects of a progressive recovery can be seen in Figure 2. A metal substrate, 5, is in the process of being coated with sealing material, 3. Elastomeric sleeve, 2, has been released at one end from restraining member 1. Where sleeve, 2, has been released it has forced sealing material, 3, into contact with substrate, 5. The progressive recovery of sleeve, 2, forces material, 3, in the form of a ridge, 6, against substrate, 5.

## Claims

1. A method of delivering a sealing material (3) to a substrate wetted with water, which comprises:

(a) positioning the sealing material (3) adjacent the substrate;

(b) positioning concentrically with respect to the substrate (5) and facing the sealing material (3), a sleeve (2) maintained in a recoverable configuration by a restraining member (1) bonded to the sleeve (2) by a water-sensitive adhesive; and

(c) contacting the water-sensitive adhesive with water causing the bond to fail and the sleeve (2) to recover progressively along its length towards the substrate, thereby applying pressure to the sealing material (3) causing it to displace water from the substrate (5).

2. A method according to Claim 1, wherein the sealing material (3) is an adhesive, and step (c) causes bonding of the sealing material (3) to the substrate (5).

3. A method accoridng to any preceding claim, wherein step (c) comprises bulk contact of the sleeve (2) with water by at least partial immersion of the sleeve (2) in water or by spraying of the sleeve (2) by water.

4. A method according to any preceding claim, wherein the substrate (5) is a marine structure, the method being carried out in a splash zone.

5. A method according to any preceding claim, wherein the sleeve (2) is a wraparound sleeve, and step (b) comprises wrapping the sleeve (2) around the substrate and securing it in a wrapped-around configuration.

6. An article capable of delivering a sealing material to a substrate wetted with water, the article comprising:

(a) a sleeve (2); and

(b) a restraining member (1) bonded to the sleeve (2) by a water-sensitive adhesive, thereby maintaining the sleeve in a recoverable configuration such that when the adhesive is contacted with water the bond fails causing the sleeve (2) to recover progressively along its length towards the substrate (5), thereby applying pressure to the sealing material (3) placed adjacent the substrate (5) causing it to displace water from the substrate (5).

7. An article or method according to any preceding claim, wherein the sealing material (3) is coated on a surface of the sleeve (2).

8. An article according to Claim 7, wherein the sealing material (3) is coated on an internal surface of the sleeve (2) and the restraining member (1) is bonded to an external surface of the sleeve (2).

9. An article according to Claim 7 or 8, wherein the sealing material (3) is curable.

10. An article according to Claim 9, wherein the sealing material (3) comprises a two-part curable epoxy, a one-part moisture-curing mastic, or a curable urethane.

11. An article or method according to any preceding claim, wherein the restraining member comprises a water-sensitive adhesive bonded directly to the sleeve (2).

12. An article or method according to any preceding claims, wherein the water-sensitive adhesive comprises a water-soluble polymer and an elastomer.

13. An article or method according to Claim 12, wherein the water-soluble polymer comprises polyvinyl alcohol, polyvinyl pyrrolidone or polyethylene oxide.

14. An article or method according to Claim 12 or 13, wherein the elastomer comprises polychloroprene, styrene-butadiene copolymer or polyisobutylene.

15. An article or method according to any preceding claim, wherein the sleeve (2) has means for providing the progressive release of the sleeve (2) from the restraining member (1).

16. An article or method according to Claim 15, wherein the means for providing the progressive release comprises: a decrease in thickness of the restraining member (1) along a length of the sleeve (2); an increase in water solubility of the restraining member (1) along a length of the sleeve (2); an increase in water solubility of the restraining member (1) along a length of the sleeve (2); or an increase in water permeability of the restraining member (1) along the length of the sleeve (2).

17. An article according to any of the Claims 6 to 16, wherein the sleeve (2) is a wrap-around sleeve having means for retaining it in a wrap-around configuration.

**Patentansprüche**

1. Verfahren zum Zuführen eines Abdichtungsmaterials (3) zu einem mit Wasser benetzten Substrat, wobei das Verfahren umfaßt:

(a) man positioniert das Abdichtungsmaterial (3) angrenzend zum Substrat;

(b) man positioniert konzentrisch zum Substrat (5) und gegenüberliegend dem Abdichtungsmaterial (3) eine Buchse (2), die in einer zurückstellbaren Konfiguration über ein Halteteil (1) gehalten ist, das an die Buchse (2) mittels eines wasserempfindlichen Klebers geklebt ist; und

(c) man bringt den wasserempfindlichen Kleber mit Wasser in Kontakt, bewirkt eine Lösung der Klebung und ein progressives Zurückstellen der Buchse (2) über ihre Länge in Richtung auf das Substrat, wodurch Druck auf das Abdichtmaterial (3) ausgeübt wird, so daß dieses Wasser vom Substrat (5) verdrängt.

2. Verfahren nach Anspruch 1, wobei das Abdichtungsmaterial (3) ein Kleber ist und der Schritt (c) ein Kleben des Abdichtungsmaterials (3) auf dem Substrat (5) bewirkt.

3. Verfahren nach einem der vorhergehenden Ansprüche, wobei der Schritt (c) einen innigen Kontakt der Buchse (2) mit Wasser durch mindestens teilweises Eintauchen der Buchse (2) in Wasser oder durch Besprühen der Buchse (2) mit Wasser umfaßt.

4. Verfahren nach einem der vorhergehenden Ansprüche, wobei das Substrat (5) ein Marinestruktur ist und das Verfahren in einer Spritzzone ausgeführt wird.

5. Verfahren nach einem der vorhergehenden Ansprüche, wobei die Buchse (2) eine Wickelhülse ist, und Schritt (b) das Wickeln der Buchse (2) um das Substrat und deren Festmachen in der rundum gewickelten Stellung umfaßt.

6. Ein Artikel, der zum Aufbringen eines Abdichtungsmaterials auf ein mit Wasser benetztes Substrat geeignet ist, wobei der Artikel umfaßt:

(a) eine Buchse (2); und

(b) ein Halteteil (1), das an die Buchse (2) mittels eines wasserempfindlichen Klebers geklebt ist, wodurch die Buchse in einer rückstellbaren Konfiguration derart gehalten ist, daß dann, wenn der Kleber mit Wasser in Kontakt gebracht wird, sich die Klebung löst und bewirkt, daß die Buchse (2) progressiv entlang ihrer Länge in Richtung auf das Substrat (5) sich zurückstellt, wodurch Druck auf das Abdichtungsmaterial (3) aufgebracht wird, das beim Substrat (5) angeordnet ist und dieses zur Verdrängung vn Wasser vom Substrat (5) veranlaßt wird.

7. Artikel oder Verfahren nach einem der vorhergehenden Ansprüche, wobei das Abdichtungsmaterial (3) auf einer Oberfläche der Buchse (2) als Schicht aufgebracht ist.

8. Arikel nach Anspruch 7, wobei das Abdichtungsmaterial (3) auf einer inneren Fläche der Buchse (2) als Schicht aufgebracht ist und das Halteteil (1) auf eine Außenfläche der Buchse (2) aufgeklebt ist.

9. Artikel nach Anspruch 7 oder 8, wobei das Abdichtungsmaterial (3) aushärtbar ist.

10. Artikel nach Anspruch 9, wobei das Abdichtungsmaterial (3) ein zweiteiliges aushärtbares Epoxid, ein einteiliges feuchtigkeitsaushärtendes Mastix oder ein aushärtbares Urethan umfaßt.

11. Artikel oder Verfahren nach einem der vorhergehenden Ansprüche, wobei das Halteteil einen wasserempfindlichen Kleber umfaßt, der direkt auf die Buchse (2) geklebt ist.

12. Artikel oder Verfahren nach einem der vorhergehenden Ansprüche, wobei der wasserempfindliche Kleber ein wasserlösliches Polymer und ein Elastomer umfaßt.

13. Artikel oder Verfahren nach Anspruch 12, wobei das wasserlösliche Polymer Polyvinylalkohol, Polyvinylpyrrolidon oder Polyethylenoxid umfaßt.

14. Artikel oder Verfahren nach den Ansprüchen 12 oder 13, wobei das Elastomer Polychloropren, Styrol-Butadien Copolymer oder Polyisobutylen umfaßt.

15. Artikel oder Verfahren nach einem der vorhergehenden Ansprüche, wobei die Buchse (2) Mittel aufweist, um ein progressives Lösen der Buchse (2) vom Halteteil (1) sicherzustellen.

16. Artikel oder Verfahren nach Anspruch 15, wobei die Mittel zum Sicherstellen der progressiven Lösens umfassen: eine Dickenabnabme des Halteteils (1) über die Länge der Buchse (2); eine Zunahme an Wasserlöslichkeit des Halteteils (1) über die Länge der Buchse (2); eine Zunahme der Wasserlöslichkeit des Halteteils (1) über die Länge der Buchse (2); oder eine Zunahme der Wasserdurchlässigkeit des Halteteils (1) über die Länge der Buchse (2).

# EP 0 104 949 B1

17. Artikel nach einem der Ansprüche 6 bis 16, wobei die Buchse (2) eine Wickelbuchse ist, welche Mittel aufweist, um sie in ihrer Wickelkonfiguration zu halten.

**Revendications**

1. Procédé d'application d'une matière d'obturation (3) à un substrat mouillé avec de l'eau, qui consiste:
   (a) à mettre en place la matière d'obturation (3) à proximité immédiate du substrat;
   (b) à mettre en place de manière concentrique par rapport au substrat (5) et de manière à être en face de la matière d'obturation (3), un manchon (2) maintenu en une position permettant une reprise de forme au moyen d'un élément (1) de contention fixé au manchon (2) par un adhésif sensible à l'eau; et
   (c) à mettre en contact avec de l'eau l'adhésif sensible à l'eau, ce qui provoque la rupture de la liaison et la reprise de forme du manchon (2) progressivement suivant sa longueur, en direction du substrat, une pression étant ainsi appliquée à la matière d'obturation (3), ce qui l'amène à déplacer de l'eau du substrat (5).

2. Procédé suivant la revendication 1, dans lequel la matière d'obturation (3) est un adhésif, et l'étape (c) provoque la liaison de la matière d'obturation (3) au substrat (5).

3. Procédé suivant l'une quelconque des revendications précédentes, dans lequel l'étape (c) comprend un contact direct du manchon (2) avec de l'eau par une immersion au moins partielle du manchon (2) dans l'eau ou bien par pulvérisation d'eau sur le manchon (2).

4. Procédé suivant l'une quelconque des revendications précédentes, dans lequel le substrat (5) est une structure marine, le procédé étant mis en oeuvre dans une zone de projections.

5. Procédé suivant l'une quelconque des revendications précédentes, dans lequel le manchon (2) est un manchon enroulé, et l'étape (b) comprend l'enroulement du manchon (2) autour du substrat et sa fixation en une configuration enroulée.

6. Article capable d'appliquer une matière d'obturation à un substrat mouillé avec de l'eau, l'article comprenant:
   (a) un manchon (2); et
   (b) un élément de contention (1) lié au manchon (2) par un adhésif sensible à l'eau, maintenant ainsi le manchon dans une configuration propre à la reprise de forme, de sorte que, lorsque l'adhésif est mis en contact avec de l'eau, la liaison soit rompue, ce qui provoque la reprise progressive de forme du manchon (2) suivant sa longueur en direction du substrat (5), une pression étant ainsi appliquée à la matière d'obturatin (3) placée en contiguïté avec le substrat (5), ce qui provoque le déplacement d'eau du substrat (5) par cette matière.

7. Article ou procédé suivant l'une quelconque des revendications précédentes, dans lequel une surface du manchon (2) est revêtue de la matière d'obturation (3).

8. Article suivant la revendication 7, dans lequel une surface interne du manchon (2) est revêtue de la matière d'obturation (3) et l'élément de contention (1) est lié à une surface externe du manchon (2).

9. Article suivant la revendication 7 ou 8, dans lequel la matière d'obturation (3) est réticulable.

10. Article suivant la revendication 9, dans lequel la matière d'obturation (3) consiste en une résine époxy réticulable en deux constituants, un mastic en un seul constituant réticulable par l'humidité ou un uréthanne réticulable.

11. Article ou procédé suivant l'une quelconque des revendications précédentes, dans leque l'élément de contention consiste en un adhésif sensible à l'eau lié directement au manchon (2).

12. Article ou procédé suivant l'une quelconque des revendications précédentes, dans lequel l'adhésif sensible à l'eau comprend un polymère hydrosoluble et un élastomère.

13. Article ou procédé suivant la revendication 12, dans lequel le polymère hydrosoluble consiste en alcool polyvinylique, en polyvinylpyrrolidone ou en oxyde de polyéthylène.

14. Article ou procédé suivant la revendication 12 ou 13, dans lequel l'élastomère consiste en polychloroprène, en copolymère styrène-butadiène ou en polyisobutylène.

15. Article ou procédé suivant l'une quelconque des revendications précédentes, dans lequel le manchon (2) possède un moyen permettant la libération progressive du manchon (2) de l'élément de contention (1).

16. Article ou procédé suivant la revendication 15, dans lequel le moyen permettant la libération progressive consiste en: une diminution d'épaisseur de l'élement de contention (1) le long du manchon (2); un accroissement d'hydrosolubilité de l'élément de contention (1) le long du manchon (2); ou bien un accroissement de perméabilité à l'eau de l'élément de contention (1) le long du manchon (2).

17. Article suivant l'une quelconque des revendications 6 à 16, dans lequel le manchon (2) est un manchon enroulé présentant un moyen de le maintenir dans une configuration enroulée.

Fig.1.

EP 0 104 949 B1

Fig.2.

EP 0 104 949 B1